(19) Europäisches Patentamt
European Patent Office
Office européen des brevets

(11) **EP 4 119 443 B1**

(12) **EUROPEAN PATENT SPECIFICATION**

(45) Date of publication and mention
of the grant of the patent:
**05.03.2025 Bulletin 2025/10**

(21) Application number: **22178562.9**

(22) Date of filing: **13.06.2022**

(51) International Patent Classification (IPC):
**B64D 27/24** (2024.01)     **B64C 29/00** (2006.01)
**B64C 11/46** (2006.01)

(52) Cooperative Patent Classification (CPC):
**B64C 11/46; B64C 29/0033; B64D 27/33;
B64D 27/355; B64D 27/357; B64D 31/18;
B64D 35/021; B64D 35/024;** Y02T 50/60

(54) **MULTI-PROPULSOR ELECTRIC AIRCRAFT**

ELEKTRISCHES FLUGZEUG MIT MEHREREN ANTRIEBEN

AÉRONEF ÉLECTRIQUE MULTIPROPULSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.07.2021 GB 202110046**

(43) Date of publication of application:
**18.01.2023 Bulletin 2023/03**

(73) Proprietor: **Rolls-Royce plc**
**London N1 9FX (GB)**

(72) Inventor: **Britchford, Kevin**
**Derby, DE24 8BJ (GB)**

(74) Representative: **Rolls-Royce plc**
**Moor Lane (ML-9)**
**PO Box 31**
**Derby DE24 8BJ (GB)**

(56) References cited:
**EP-A1- 3 543 119          EP-A1- 3 594 107
WO-A1-2020/240567    US-A1- 2017 274 991**

## Description

## TECHNICAL FIELD

This disclosure relates to an aircraft having multiple, electrically driven propulsors, and a control method for such an aircraft.

## BACKGROUND

Aircraft having electric propulsion have been proposed. Such aircraft comprise one or more propulsors (such as propellers or ducted fans) driven by electric motors, which are in turn supplied with power from a power source such as a battery, fuel cell, or internal combustion engine driven generator.

An issue with such aircraft is noise. The principle source of noise in such aircraft is usually the propulsors, which generate noise via various physical mechanisms. The perceived effect of this noise will vary depending on the overall loudness (in terms of perceived noise decibels - PdB), as well as other factors. Consequently, it is an objective of the present disclosure to provide an aircraft and a method of controlling an aircraft which has reduced perceived noise.

European patent application EP 3543119 discloses an aerial vehicle. The aerial vehicle is a vertical take-off and landing (VTOL) aerial vehicle which comprises an airframe and a plurality of rotors operatively coupled with one or more motors. The plurality of rotors comprise a first, second, third, and fourth rotor. Each of the first, second, third, and fourth rotors are arranged in a single plane and oriented to direct thrust downward relative to the airframe. In certain aspects, at least two of the plurality of rotors employ a different geometry to generate a targeted noise signature.

United States patent application US 2017274991 discloses aerial vehicles which include propulsion units having motors with drive shafts that are aligned at a variety of orientations, propellers with variable pitch blades, and common operators for aligning the drive shafts at one or more orientations and for varying the pitch angles of the blades. The common operators include plate elements to which a propeller hub is rotatably joined, and which are supported by one or more linear actuators that may extend or retract to vary both the orientations of the drive shafts and the pitch angles of the blades. Operating the motors and propellers at varying speeds, gimbal angles or pitch angles enables the motors to generate forces in any number of directions and at any magnitudes. Attributes of the propulsion units may be selected in order to shape or control the noise generated thereby.

## SUMMARY

According to a first aspect there is provided a propulsion system for an aircraft, the propulsion system comprising:

at least first and second propulsors, each propulsor being independently driven by a respective electric motor, the first and second propulsors each comprising respective rotors comprising a plurality of blades, the rotor of the first and second propulsors each having a blade pitch varying mechanism; and
a controller configured to control the first and second propulsors independently of each other, such that each propulsor produces a tone noise at a different frequency to at least one other propulsor; characterised in that:
the controller is configured to control the speed and pitch of the blades of the first and second propulsors, and is configured to:

receive a commanded thrust input; and
determine a combination of rotor speeds and pitch angles for each rotor which provides the commanded thrust while producing different tone frequencies from each rotor to generate a target blade pitch and rotor speed for each rotor.

Advantageously, in view of the freedom to operate within a range of speeds for a particular required thrust (in view of the blade pitch varying mechanism), each propulsor can be controlled to produce tone noise at different peak frequencies, since the blade passing frequency of the blades is dependent on speed. By generating a plurality of tones, this system can be used to produce a lower perceived noise. Consequently, an aircraft is provided which has a reduced overall noise signature during substantially all phases of operation.

The controller may be configured to control the speed and pitch of the blades such that a frequency spectrum of the propulsion system matches a predetermined spectrum.

The controller may be configured to control the speed and pitch of the blades such that the rotor speed of a respective propulsor is substantially constant over a range of thrust levels. Advantageously, the tone noise of a given propulsor is maintained at a substantially constant frequency during manoeuvres, thereby further reducing perceived noise.

At least one of the propulsors may comprise either a propeller or a ducted fan.

The rotor of the first propulsor may have a different number of blades relative to the second propulsor. Consequently, the principal noise frequency of the first and second propulsors may be different at the same rotational frequency. Blades of the first propulsor may have a different diameter to blades of the second propulsor. Advantageously, a similar thrust can be produced by the different rotors, but with a different tonal noise, by rotating a smaller diameter bladed propulsor at a higher speed.

One or more of the propulsors may be vectorable about a horizontal plane. The present disclosure is particularly suitable for aircraft featuring vectored propulsion, since the propulsors may need to produce more or less thrust by a large amount during operation in some modes.

The or each vectorable propulsor may be configured to provide vectorable thrust relative to one or more of the aircraft fuselage and the aircraft wing.

The propulsion system may comprise one of a chemical battery and a fuel cell configured to provide electrical power to the propulsors.

Alternatively or in addition, the propulsion system may comprise an internal combustion engine such as a gas turbine engine coupled to an electrical generator to provide electrical power to the propulsors.

According to a second aspect there is provided an aircraft comprising the propulsion system of the first aspect.

The aircraft may comprise a tilt-wing aircraft comprising one or more propulsors mounted fixedly to a wing, wherein the wing is pivotable relative to the aircraft fuselage. The tilt-wing aircraft may further comprise one or more cruise propulsors mounted fixed to the aircraft, and configured to provide forward thrust.

The aircraft may comprise a tilt-rotor aircraft comprising one or more propulsors pivotably mounted to a wing, wherein the wing is fixedly mounted relative to the aircraft fuselage. The tilt-rotor aircraft may further comprise one or more cruise propulsors mounted fixedly to the aircraft, and configured to provide forward thrust.

The aircraft may comprise a lift fan aircraft comprising one or more lift fans having a fixed orientation, and configured to provide vertical lift, and one or more cruise propulsors configured to provide horizontal thrust.

The aircraft may comprise a fixed wing aircraft comprising a plurality of fixed propulsors.

According to a third aspect, there is provided a method of controlling an aircraft according to the first aspect; wherein the method comprises

by a controller, controlling the rotor speed and pitch of the blades (37) of the first and second propulsors (30a-d), according to a control method comprising:

receiving a commanded thrust input; and
determining a combination of rotor speeds and pitch angles for each rotor which provides the commanded thrust while producing different tone frequencies from each rotor to generate a target blade pitch and rotor speed for each rotor.

The method may comprise controlling the speed and pitch of the blades such that one or more of a frequency spectrum and the rotor speed is substantially constant over a range of thrust levels.

The method may comprise monitoring a frequency spectrum of the propulsion system, and controlling the propulsion system to ensure a separation of the peaks of the frequency spectrum in the frequency domain.

## BRIEF DESCRIPTION OF THE DRAWINGS

An embodiment will now be described by way of example only with reference to the accompanying drawings, which are purely schematic and not to scale, and in which:

Figure 1 is a schematic side view of a tilt wing aircraft in a hovering flight mode;

Figure 2 is a schematic side view of the aircraft of figure 1 in a horizontal flight mode;

Figure 3 is a schematic front view of the aircraft of figure 1 in the horizontal flight mode;

Figure 4 is a schematic view from above of a fixed wing aircraft;

Figure 5 is a schematic front view of the aircraft of figure 4;

Figure 6 is a flow diagram illustrating a method of controlling an aircraft of any of figures 1 to 5;

Figure 7 is a flow diagram illustrating a sub-routine of the method of control of figure 6;

Figure 8 is a graph showing a noise signature of a conventional aircraft;

Figures 9a and 9b are graphs showing the noise signature of the aircraft figure 1, when operated without the method of figures 5 and 6; and

Figures 10a and 10b are graphs showing the noise signature of the aircraft of figure 1 or figure 4, when operated according to the method of figures 6 and 7.

## DETAILED DESCRIPTION

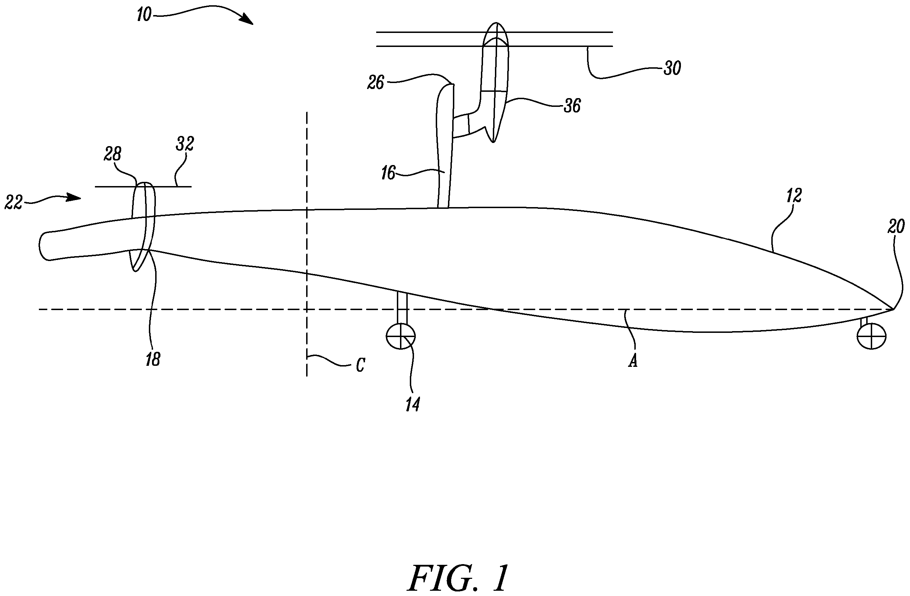

With reference to Figures 1 to 3, an aircraft 10 is shown. It will be understood that these drawings are illustrative only, and are not to scale. The aircraft comprises a fuselage 12 supported by landing gear 14. The aircraft 10 further comprises a pair of forward main wings 16, which are located such that a centre of lift in flight of the main wings 16 is approximately adjacent a centre of gravity. The aircraft 10 further comprises a tail 22 (also known as an empennage), which comprises horizontal (relative to when the aircraft is in horizontal flight) tail surfaces 18 and vertical (relative to when the aircraft is in horizontal flight) tail surfaces 34 which extend from ends of each horizontal tail surface 18. The fuselage 12 comprises a nose 20, which defines a forward end of the aircraft 10, and the tail 22 which defines a rearward end of the aircraft 10.

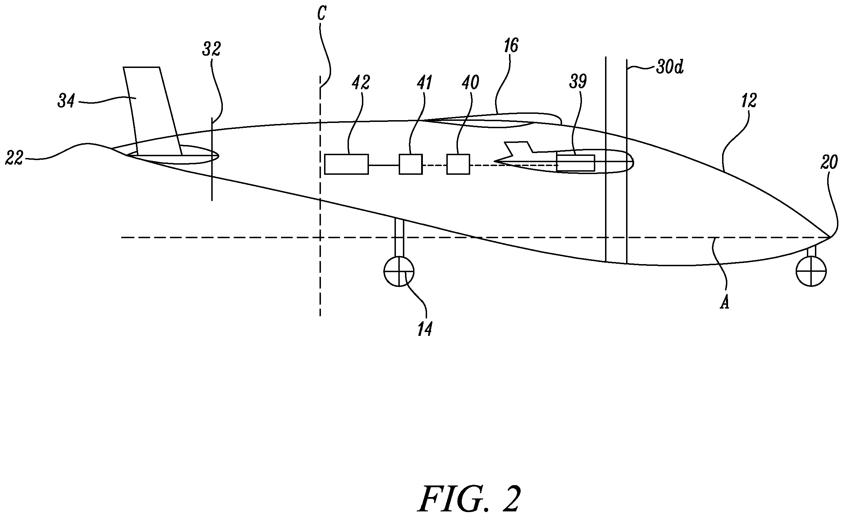

The aircraft 10 further comprises a propulsion system. Each wing 16 mounts one or more propulsors of the propulsion system. The wing mounted propulsors are in the form of propellers 30a-d in this embodiment, but it will be understood that different types of propulsors (fan for instance) could be employed. Similarly, one or more further propulsors in the form of propellers 32 are mounted to the tail 22. Each propulsor 30a-d is driven by a respective electric motor 39 (shown in figure 2), which is powered by an electrical power source. In the described embodiment, the power source comprises an electric storage device 40 such as one or more fuel cells or chemical batteries, and an electrical generator 41 driven by an internal combustion engine in the form of a gas turbine engine 42.

As can be seen in the figures, the aircraft 10 defines several directions. A longitudinal direction A extends between the nose 20 and tail 22 in a generally horizontal direction when the aircraft 10 is in level flight or parked on the ground. A lateral direction (not shown) extends between tips of the main wings 16 in a direction normal to the longitudinal axis A in a generally horizontal direction. A vertical direction C extends in a direction generally normal to the ground when the aircraft is in level flight or parked on the ground.

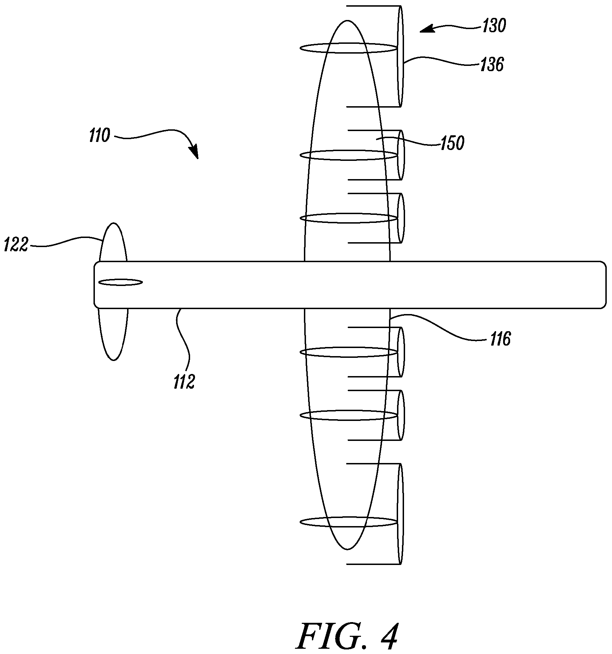

Both the main wings 16 and the horizontal tail surfaces 18 are pivotable together between a horizontal flight configuration (as shown in figure 1) and a vertical flight configuration (as shown in figure 4). In other words, the main propellers 30a-d rotate about a fixed axis relative to the main wing 16, with the main wing 16 being pivotable. In the horizontal flight configuration (shown in figure 2), the wings 16 and horizontal tail surfaces 18 present respective leading edges 26, 28 toward the forward, longitudinal direction A. The main wing 16 and horizontal tail surface 18 are configured to pivot about the lateral direction to transition to the hovering flight configuration, in which the leading edges 26, 28 are directed upwards, in the vertical direction, as shown in figure 1.

During VTOL operation, the aircraft normally starts on the ground with the wings 16 and tail 22 in the hovering configuration, as shown in figure 1. The aircraft takes off in a vertical direction (though possibly with some horizontal component also), before transitioning to the horizontal flight mode as shown in figure 2. During the transition, the wings 16 and tail 22 pivot slowly from the hovering to the horizontal positions as speed increases. Similarly, for landing, the aircraft transitions once more from the horizontal to the hovering modes.

During some phases of flight (particularly during hover and transition), conventional flight surfaces (such as rudders, elevators, ailerons etc.) may not encounter sufficient airflow to provide the necessary control authority to allow for stable flight and manoeuvring. Consequently, the propulsors 30a-d, 32 may be controlled differentially to augment or replace the flight control surfaces, by providing non-symmetric thrust to the aircraft. For instance, increased thrust may be provided by the propulsor 32 relative to the propulsors 30a-d, in order to pitch the aircraft forward, whereas increased thrust of the propulsors 30a, 30b relative to the propulsors 30b, 30d may be provided in order to provide roll. During however and transition, relatively large thrust changes may be required over short periods of time in order to provide the necessary control. This may result in repeated increases and reductions in thrust by individual propulsors 32, 30a-d, which may result in substantial and rapid pitch changes of the noise generated by the propulsors 32, 30a-d.

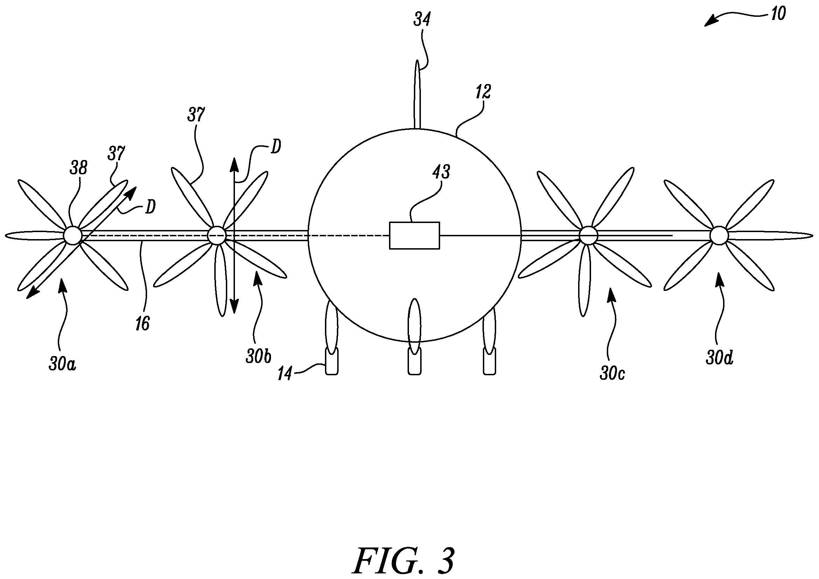

Referring to figure 3, the propellers 30a-d are shown in further detail. Each propeller 30a-d comprises at least one rotor 36 comprising a plurality of blades 37. The propellers 30a-d can be divided into two pairs - a first pair 30a, 30d and a second pair 30b, 30c. One of the propellers of each pair 30a, 30b, 30c, 30d is typically provided on one side of the wing 16, with another propeller of each pair provided on the other side of the wing 16, such that there is substantially no thrust imbalance in flight. Each propeller of the first pair 30a, 30d has four blades 37, while each propeller of the second pair 30b, 30c has five blades 37 in this example. More generally, at least first and second propellers of the aircraft 10 comprise different numbers of blades. In principle, any number of blades can be provided, and typically, in order to minimise overall noise by reducing tip speed, a larger number of blades, for example between five and eleven, is desirable.

Typically, it is desirable that the blade numbers of the different propellers do not have common factors. For example, if the first pair of blades comprised two blades, and the second comprised four blades, then the second harmonic frequency of the first blade would match the first harmonic of the second blade.

Each blade 37 is mounted to a hub 38. Each hub 38 comprises a variable pitch mechanism 39, which is configured to pivot each blade about a generally radial axis, normal to the axis of rotation of the respective propeller 30a-d. The variable pitch mechanism 39 is of conventional construction, and could for example comprise an electric or hydraulic motor.

As can also be see in figure 3, each blade 37 has substantially the same radius D. It will be appreciated therefore, that the tip speed of the propellers 37 will be the same, provided the propellers 30a-d rotate at the same speed.

A controller 43 is also provided. The controller 43 is typically electronic, and may for example comprise a multi-purpose computer. The controller 43 is configured to control both the rotational speed of the propellers 30a-d, as well as the blade pitch by controlling actuation of the variable pitch mechanism 38.

It will be appreciated that, during flight, it is necessary to control thrust produced by the propulsors 30a-d, particularly during hover and transition. Conventionally, thrust on an electric aircraft would be controlled by controlling blade speed. A large proportion of noise, and particularly a large portion of tonal noise (which is more easily perceived) has a frequency related to the blade passing frequency f. The blade passing frequency f in Hertz (Hz) is given by the formula:

$$f = \frac{Nx}{60}$$

Where N is the number of blades on the propulsor, and x is the rotational speed of the propulsor in revolutions per minute (RPM). Consequently, the frequency of noise at the blade passing frequency is dependent on the rotational speed of the blade. Normally therefore, increasing thrust will result in increased noise pitch (i.e. the frequency of the tones and their harmonics), while reducing thrust will result in reduced noise pitch.

Consequently, controlling the thrust by controlling blade speed causes the noise from the propulsors to vary in pitch. In the present disclosure, thrust is instead controlled by the controller 43, which is configured to control thrust for each individual propulsor 30a-d, 32, by controlling electric motor torque.

It will be appreciated that, for a variable speed, variable pitch propeller rotor, there typically exist two combinations of blade pitch and rotor speed which will generate equivalent thrust. For example, a high blade pitch and low rotation speed may generate the same thrust as a relatively low blade pitch, and high blade speed. In conventional aircraft, the blade pitch is controlled to provide relatively constant blade speed, such that engine which drives the propeller is operated at its most efficient rotational speed. However, electric motors typically have a relatively wide efficiency band, which frees the blade speed and pitch angle for other forms of optimisation. In the present disclosure, this additional degree of freedom is utilised to minimise noise.

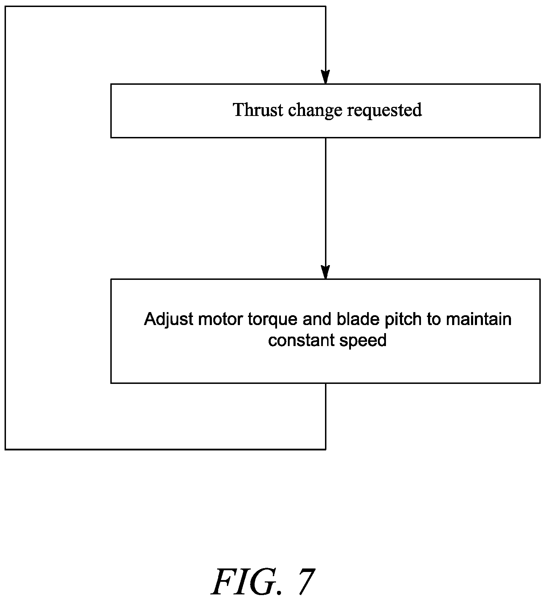

Referring to figure 7, there is shown a control loop for controlling the propulsors 130. In a first step, a change in thrust is input to the controller, either from a pilot, or from an autopilot or autothrottle. The controller 43 then considers the rotational speed of each of the propellers 130, and finds a combination of rotor speeds and pitch angles for each propeller which provides the necessary thrust, while producing different tone frequencies from each propeller to generate a target propeller pitch and rotor speed for each rotor. Where each propeller comprises the same number of blades, this corresponds to different rotational speeds. Consequently, where the propellers are provided in pairs having the same blade number, a different rotational frequency is required for each blade in that pair. In some cases, a minimum noise frequency difference may be specified, to avoid "beating" noise, where the frequencies or their harmonics are closely matched. Similarly, the blade speed may be controlled such that, in aggregate, the propulsion system produces noise having a particular desired noise spectrum, e.g. having relatively "broadband" noise, in which distinct tonal noise is reduced as much as possible. In such a case, the speeds are controlled such that the overall range of tonal noise (i.e. the range from the lowest principal frequency to the highest principal frequency) is relatively large, with few frequency gaps.

In determining the necessary speeds and rotor pitch angles, the controller may comprise a model or lookup table, which correlates speeds and propeller pitch to thrust, to find a combination that produces the necessary thrust. Propeller speeds are determined for each propulsor, such that frequencies generated by each propulsor do not match by greater than the required minimum, and the required thrust is met. In some cases, the required thrust from the different propulsors may be different, particularly where differential propulsor thrust is utilised for pitch, yaw and roll control.

In one embodiment, the system may comprise a closed loop PID (proportional, integral, derivative) controller, in which target propeller rotor speed and pitch angle are determined for each propulsor, and sensors are utilised to determine the current motor and propeller pitch. The controller then seeks to minimise the error between the current and target values for the propeller speed and pitch. Alternatively, the system may utilise open loop or model based control, or some other control methodology as would be understood by the person skilled in the art.

Once a combination of rotor speeds and blade angles are selected which provides a broad range of distinct tones, the system may then attempt to maintain the blade speeds relatively constant, within a particular thrust range, to avoid rising or falling tone sounds.

For example, where an increase in thrust is requested, increased torque is provided by the electric motors 39, while the hub 38 is controlled to increase the pitch angle of the respective blades 37 of that propeller 30a-d. Consequently, a constant tip speed is maintained, while thrust is increased, in view of the increased angle of attack of the blades. The opposite procedure is used for reducing thrust.

Such rapid thrust changes may be required during level flight, both for vectored thrust aircraft such as tilt-wings, and also for other aircraft types such as conventional, fixed wing aircraft. For example, it may be desirable to maintain constant speed over the ground during wind gusts, both for reasons of aircraft stability and passenger comfort. In such circumstances, rapid increases and reductions in thrust may be required.

Figure 7 shows this control method in the form of a flow diagram. In a first step, a thrust demand change (either an increase or a decrease) is requested (either directly by a pilot controlling a throttle lever, or by a flight control or autopilot computer). This thrust change is then enacted by the controller 43 by increasing torque on the electric motors 39. Typically, in normal level flight, thrust will be increased and reduced to the same extent for all motors 39. However, during certain flight modes such as hover, thrust may be increased or reduced differently for individual blades to replace or augment aircraft control provided by flight surfaces. In some cases, the thrust change demand may originate from a control input, such as for instance a forward or sideways movement of the yoke, or stick. This is then translated into a thrust demand by the flight computer, which is provided in accordance with the above method. In a third step (which may occur simultaneously with the second step), the pitch of the propeller blades is altered to provide the increased thrust, without altering the propeller rotor speed.

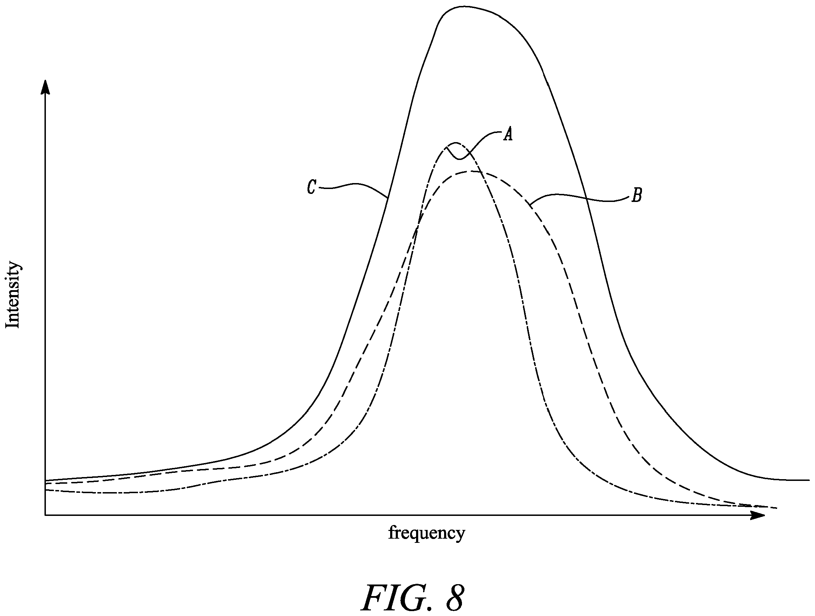

Figure 8 is a graph showing noise generated by a conventional aircraft (not shown) having two propellers driven by electric motors. The graph shows the noise in the frequency domain, i.e. noise intensity plotted against noise frequency. In this aircraft, the two propellers have a common number of rotor blades (e.g. four).

As can be seen, in view of their similarity, the two propellers generate tone noise A, B, having peaks at a particular frequency, which is the same for the two propellers. These peaks combine to create an overall noise signature C, which is a combination of the two noise sources. As can be seen, this creates a noise peak at a particular frequency, having a higher intensity than the two individual sources. Consequently, a large overall noise signature is produced. This is the case for any aircraft in which multiple propulsors are provided with each propulsor having the same number of blades. Furthermore, this noise is "narrowband", which can be perceived as a single tone or "hum". This can be perceived as being particularly annoying, and so it is desirable to avoid such a narrowband noise signature.

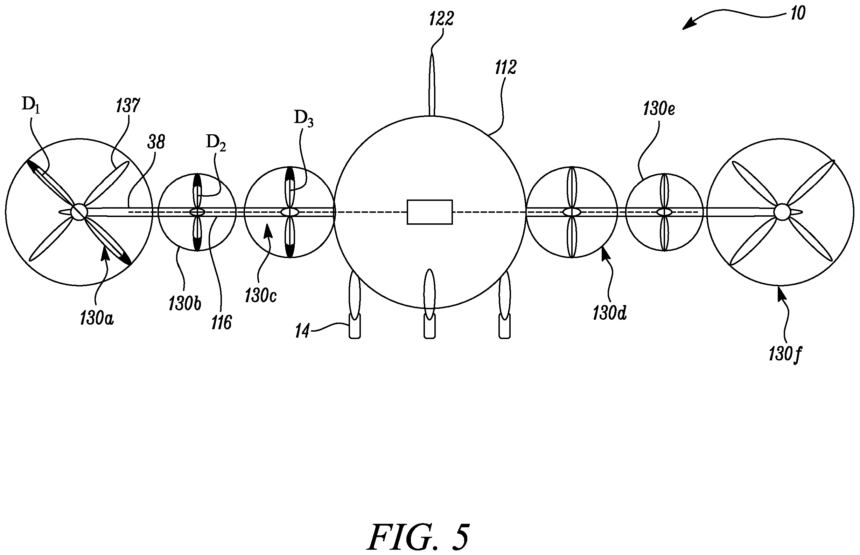

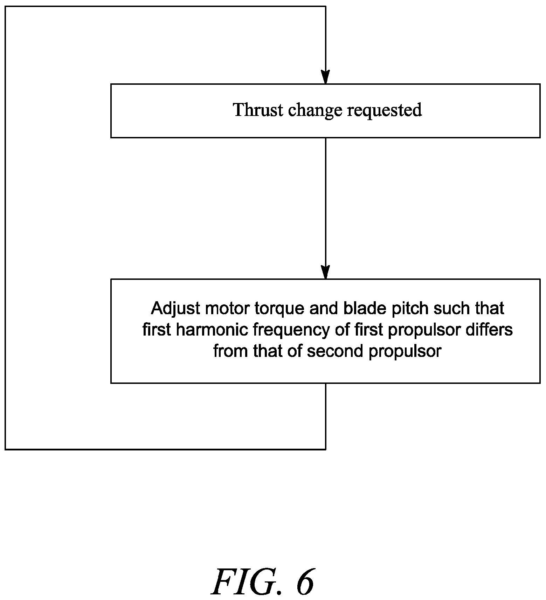

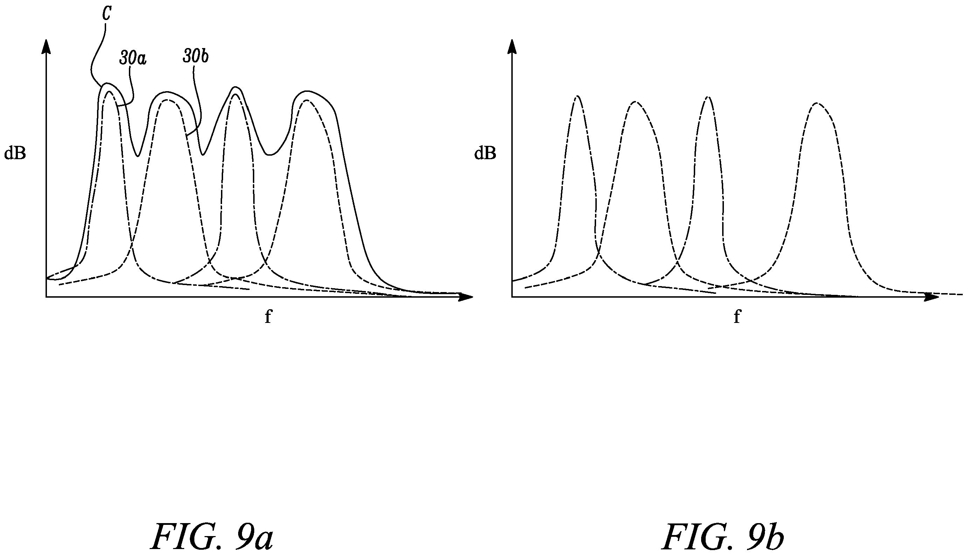

Figures 9a and 9b are graphs similar to figure 5, but of noise generated by the aircraft 10 when operated in accordance with the method of operating shown in figure 6. As can be seen, each of the propulsors 130a-d generate tone noise having different frequencies, since the blades have different blade passing frequencies in view of the control method and the different numbers of blades in the different pairs of rotors. As can be seen, the maximum overall noise amplitude C is lower at any given frequency, and so a lower noise is perceived. Furthermore, in view of the increased range of frequencies, the noise spectrum is "broadband", which will be perceived as being closer to "white noise". This is in turn harder to distinguish from background noise, and thus has a decreased perceived noise.

Figure 9a shows the propellers operated at a first, relatively low speed, during low speed operation. Figure 9b shows one of the propellers operated 30b at a higher speed than in figure 9a, such as where a higher thrust is required to effect a roll or yaw. As can be seen, the frequency of the peak noise of that propeller is shifted toward the right of the graph, i.e. to a higher frequency. This shift in frequency is perceived as an increase in pitch. Experiments in which human subjects have been presented with such noise have shown that this shift in pitch is particularly distracting, and is regarded as being particularly annoying. Furthermore, the increased frequency spacing between the tone noises results in the tone noise being more perceptible as distinct tones, thereby reducing the "broadband" noise effect. Consequently, such shifts in pitch are undesirable.

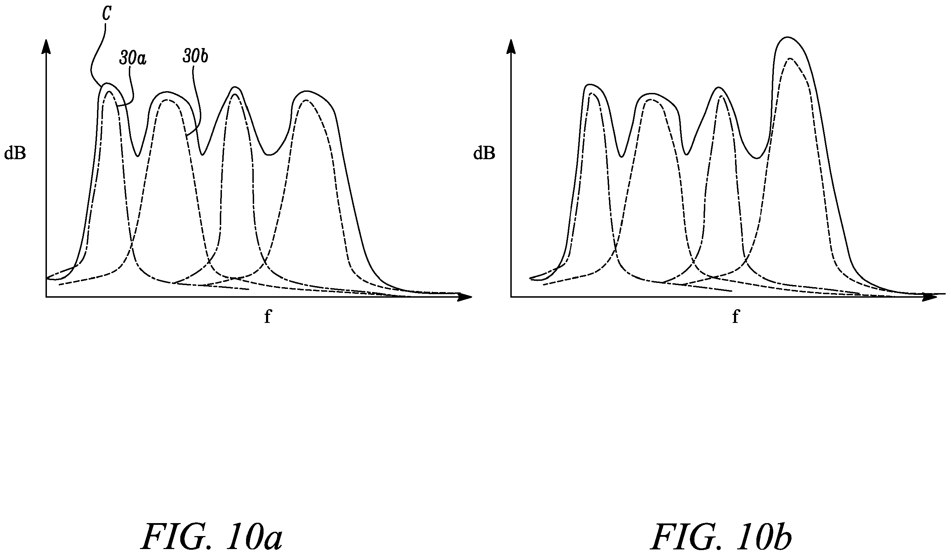

Figure 10a and 10b are graphs showing the aircraft 10 when operated in accordance with the method shown in figure 7. As can be seen, at both low and high thrusts, the noise produced is the same in the frequency domain, albeit with a greater magnitude for the propeller 30b due to the increased blade loading. Consequently, the noise signature is maintained, and no change in pitch can be observed. Consequently, the perceived noise of the aircraft 10 when operated in accordance with the method of figure 7 is lower than when operated in accordance with conventional methods.

It will be understood that the general principle of the invention can be applied to a wide range of aircraft. For example, fewer propulsors (such as two) could be employed, or a larger number of propulsors. The propulsors could be of a ducted type, and the aircraft could be of a different vertical take-off configuration, (such as multirotor helicopter, tilt-rotor, compound helicopter, vectored thrust etc) or even a fixed wing aircraft.

For example, figures 4 and 5 show a second aircraft 110, comprising a fuselage 112, main wings 116 and a tail 122. Main propulsors 130a-f are mounted to the main wings 116. The aircraft 110 differs from the aircraft 10, in that the aircraft 110 has fixed wings 116, which do not pivot between hovering and cruise flight. Furthermore, the propulsors 130 are in the form of ducted fans, comprising bladed rotors 136 surrounded by an annular nacelle 150. The fan ducts serve to reduce noise still further, and may increase propulsive efficiency, while increasing weight.

Figure 5 shows a front view of the aircraft 110. The aircraft comprises six ducted fans 130a-f. The fans are grouped into three pairs - a first pair 130a, 130f, a second pair 130b, 130e, and a third pair 130c, 130d. The first pair 130a, 130f. The propulsors 103a, 130f of the first pair of propulsors comprise four blades 137, while the propulsors of the second and third propulsors 130b, 130e, 130c, 130d each comprise two blades. The first, second and third pairs of propulsors 130a-f also differ from each other in terms of their diameter - the first pair 130a, 130f has a larger diameter $D_1$ than a diameter $D_3$ of the third pair 130c, 130d, which in turn has a larger diameter than a diameter $D_2$ of the second pair.

Due to the different diameters, the fans 130a-f of each pair must rotate at different speeds, in order to generate the same amount of thrust. Consequently, a further "broadband" effect can be provided, in which tone noise can be provided at three separate frequencies.

Figure 8 shows a further method which may be employed by the aircraft in order to minimise perceived noise by the aircraft.

In many cases (such as close to airports), large numbers of aircraft of the same type may be operating simultaneously. In such a case, where the noise spectrum of these aircraft is similar to one another, the total perceived noise may be relatively high. Consequently, the aircraft is configured to ensure that a noise spectrum of the controlled aircraft differs to that of other aircraft in the vicinity.

In a first step, the controller determines the presence of one or more further aircraft in the vicinity.

In a second step, the controller determines the principal frequencies of the noise generated by the other aircraft. This may be determined using either a sensor located on the aircraft, a sensor located on the ground, or by communication with the other aircraft.

In a third step, the controller determines a combination of propeller pitch and speed for each propulsor which differs from those of each other, and from the frequency generated by the other aircraft, and controls the aircraft propulsion system in accordance with this determined pitch and speed, in a similar manner as described above.

Consequently, the method aircraft can reduced overall perceived noise in crowded locations such as near to airports.

**Claims**

1. A propulsion system for an aircraft (10), the propulsion system comprising: at least first and second propulsors (30a-d), each propulsor (30a-d) being independently driven by a respective electric motor (39), the first and second propulsors (30a-d) each comprise respective rotors (36) comprising a plurality of blades (37), the rotor (36) of the first and second propulsor each having a blade pitch varying mechanism; and a controller (43) configured to control the first and second propulsors independently of each other, such that each propulsor (30a-d) produces a tone noise at a different frequency to at the other propulsor 30(a-d);
   **characterised in that**:
   the controller is configured to control the speed and pitch of the blades (37) of the first and second propulsors (30a-d), and is configured to:

      receive a commanded thrust input; and
      determine a combination of rotor speeds and pitch angles for each rotor which provides the commanded thrust while producing different tone frequencies from each rotor to generate a target blade pitch and rotor speed for each rotor.

2. A propulsion system according to claim 2, wherein the control is configured to control the speed and pitch of the blades such that a frequency spectrum of the propulsion system matches a predetermined spectrum.

3. A propulsion system according to claim 2 or claim 3, wherein the controller is configured to control the speed and pitch of the blades such that the rotor speed of a respective propulsor is substantially constant over a range of thrust levels.

4. A propulsion system according to any of the preceding claims, wherein the rotor of the first propulsor has a different number of blades relative to the second propulsor.

5. A propulsion system according to any of the preceding claims, wherein blades (37) of the first propulsor (30a) have a different diameter to blades of the second propulsor (30d).

6. A propulsion system according to any of the preceding claims, wherein one or more of the propulsors (30a-d) is vectorable about a horizontal plane.

7. A propulsion system according to any of the preceding claims, wherein the propulsion system comprises one of a chemical battery (40) and a fuel cell configured to provide electrical power to the propulsors (30a-d).

8. A propulsion system according to any of the preceding claims, wherein the propulsion system comprises an internal combustion engine such as a gas turbine engine (42) coupled to an electrical generator (41) to provide electrical power to the propulsors (30a-d).

9. An aircraft (10) comprising the propulsion system of any of the preceding claims.

10. An aircraft according to claim 9, wherein the aircraft (10) comprises a tilt-wing aircraft (10) comprising one or more propulsors (30a-d) mounted fixedly to a wing (16), wherein the wing (16) is pivotable relative to a fuselage (12) of the aircraft (10).

11. A method of controlling an aircraft according to claim 9 or claim 10, the method comprising:
    by a controller, controlling the rotor speed and pitch of the blades (37) of the first and second propulsors (30a-d) according to a control method comprising:

       receiving a commanded thrust input; and
       determining a combination of rotor speeds and blade pitch angles for each rotor which provides the commanded thrust while producing different tone frequencies from each rotor to generate a target blade pitch and rotor speed for each rotor.

**12.** A method according to claim 11, wherein the method comprises determining a frequency spectrum of the propulsion system, and controlling the propulsion system (11) to increase a separation of the peaks of the frequency spectrum in the frequency domain.

**Patentansprüche**

**1.** Antriebssystem für ein Luftfahrzeug (10), wobei das Antriebssystem Folgendes umfasst: mindestens eine ersten und eine zweite Antriebseinrichtung (30a-d), wobei jede Antriebseinrichtung (30a-d) unabhängig durch einen jeweiligen Elektromotor (39) betrieben wird, die erste und die zweite Antriebseinrichtung (30a-d) jeweils einen jeweiligen Rotor (36) umfassen, der eine Vielzahl von Blättern (37) umfasst, wobei der Rotor (36) der ersten und der zweiten Antriebseinrichtung jeweils einen Mechanismus zur Veränderung der Blattneigung aufweist; und eine Steuerung (43), die dazu konfiguriert ist, die erste und die zweite Antriebseinrichtung unabhängig voneinander zu steuern, sodass jede Antriebseinrichtung (30a-d) ein Tongeräusch mit einer unterschiedlichen Frequenz als an der anderen Antriebseinrichtung 30(a-d) erzeugt; **dadurch gekennzeichnet, dass**:

die Steuerung dazu konfiguriert ist, die Drehzahl und Neigung der Blätter (37) der ersten und der zweiten Antriebseinrichtung (30a-d) zu steuern, und zu Folgendem konfiguriert ist:

Empfangen einer Eingabe eines Soll-Schubs; und
Bestimmen einer Kombination aus Rotordrehzahlen und Neigungswinkeln für jeden Rotor, die den Soll-Schub bereitstellt, während von jedem Rotor unterschiedliche Tonfrequenzen erzeugt werden, um für jeden Rotor eine Zielblattneigung und -rotordrehzahl zu generieren.

**2.** Antriebssystem gemäß Anspruch 2, wobei die Steuerung dazu konfiguriert ist, die Drehzahl und Neigung der Blätter so zu steuern, dass ein Frequenzspektrum des Antriebssystems mit einem vorbestimmten Spektrum übereinstimmt.

**3.** Antriebssystem gemäß Anspruch 2 oder Anspruch 3, wobei die Steuerung dazu konfiguriert ist, die Drehzahl und Neigung der Blätter so zu steuern, dass die Rotordrehzahl einer jeweiligen Antriebseinrichtung über einen Bereich von Schubstufen im Wesentlichen konstant ist.

**4.** Antriebssystem gemäß einem der vorhergehenden Ansprüche, wobei der Rotor der ersten Antriebseinrichtung in Bezug auf die zweite Antriebseinrichtung eine verschiedene Anzahl von Blättern aufweist.

**5.** Antriebssystem gemäß einem der vorhergehenden Ansprüche, wobei Blätter (37) der ersten Antriebseinrichtung (30a) einen Durchmesser aufweisen, der zu Blättern der zweiten Antriebseinrichtung (30d) verschieden ist.

**6.** Antriebssystem gemäß einem der vorhergehenden Ansprüche, wobei eine oder mehrere der Antriebseinrichtungen (30a-d) um eine horizontale Ebene vektorierbar sind.

**7.** Antriebssystem gemäß einem der vorhergehenden Ansprüche, wobei das Antriebssystem eines von einer chemischen Batterie (40) und einer Brennstoffzelle umfasst, die dazu konfiguriert ist, den Antriebseinrichtungen (30a-d) elektrische Energie bereitzustellen.

**8.** Antriebssystem gemäß einem der vorhergehenden Ansprüche, wobei das Antriebssystem eine Verbrennungskraftmaschine, beispielsweise ein Gasturbinentriebwerk (42), umfasst, die mit einem elektrischen Generator (41) gekoppelt ist, um den Antriebseinrichtungen (30a-d) elektrische Energie bereitzustellen.

**9.** Luftfahrzeug (10), umfassend ein Antriebssystem nach einem der vorhergehenden Ansprüche.

**10.** Luftfahrzeug gemäß Anspruch 9, wobei das Luftfahrzeug (10) ein Kippflügel-Luftfahrzeug (10) umfasst, das eine oder mehrere Antriebseinrichtungen (30a-d) umfasst, die fest an einem Flügel (16) montiert sind, wobei der Flügel (16) relativ zu einem Rumpf (12) des Luftfahrzeugs (10) schwenkbar ist.

**11.** Verfahren zum Steuern eines Luftfahrzeugs gemäß Anspruch 9 oder Anspruch 10, wobei das Verfahren Folgendes umfasst:
durch eine Steuerung, Steuern der Rotordrehzahl und einer Neigung der Blätter (37) der ersten und der zweiten Antriebseinrichtung (30a-d) gemäß einem Steuerungsverfahren, das Folgendes umfasst:

Empfangen einer Eingabe eines Soll-Schubs; und
Bestimmen einer Kombination aus Rotordrehzahlen und Blattneigungswinkeln für jeden Rotor, die den Soll-Schub bereitstellt, während von jedem Rotor unterschiedliche Tonfrequenzen erzeugt werden, um für jeden Rotor eine Zielblattneigung und -rotordrehzahl zu generieren.

**12.** Verfahren gemäß Anspruch 11, wobei das Verfahren Bestimmen eines Frequenzspektrums des Antriebssystems und Steuern des Antriebssystems (11), um eine Trennung der Spitzen des Frequenzspektrums in der Frequenzdomäne zu erhöhen, umfasst.

**Revendications**

1. Système de propulsion pour un aéronef (10), le système de propulsion comprenant : au moins des premier et second propulseurs (30a-d), chaque propulseur (30a-d) étant entraîné indépendamment par un moteur électrique respectif (39), les premier et second propulseurs (30ad) comprenant chacun des rotors respectifs (36) comprenant une pluralité de pales (37), le rotor (36) des premier et second propulseurs comportant chacun un mécanisme de variation de pas de pale ; et un dispositif de commande (43) configuré pour commander les premier et second propulseurs indépendamment l'un de l'autre, de sorte que chaque propulseur (30a-d) produise un bruit sonore à une fréquence différente de celle de l'autre propulseur 30(a-d) ; **caractérisé en ce que** : ledit dispositif de commande est configuré pour commander la vitesse et le pas des pales (37) des premier et second propulseurs (30a-d), et étant configuré pour :

   recevoir une entrée de poussée commandée ; et déterminer une combinaison de vitesses de rotor et d'angles de pas pour chaque rotor qui fournit la poussée commandée tout en produisant des fréquences de tonalité différentes à partir de chaque rotor pour générer un pas de pale et une vitesse de rotor cibles pour chaque rotor.

2. Système de propulsion selon la revendication 2, ladite commande étant configurée pour commander la vitesse et le pas des pales de sorte qu'un spectre de fréquences du système de propulsion corresponde à un spectre prédéfini.

3. Système de propulsion selon la revendication 2 ou la revendication 3, ledit dispositif de commande étant configuré pour commander la vitesse et le pas des pales de sorte que la vitesse de rotor d'un propulseur respectif soit sensiblement constante sur une plage de niveaux de poussée.

4. Système de propulsion selon l'une quelconque des revendications précédentes, ledit rotor du premier propulseur comportant un nombre différent de pales par rapport au second propulseur.

5. Système de propulsion selon l'une quelconque des revendications précédentes, lesdites pales (37) du premier propulseur (30a) comportant un diamètre différent des pales du second propulseur (30d).

6. Système de propulsion selon l'une quelconque des revendications précédentes, un ou plusieurs des propulseurs (30a-d) pouvant être orientés autour d'un plan horizontal.

7. Système de propulsion selon l'une quelconque des revendications précédentes, ledit système de propulsion comprenant l'une d'une batterie chimique (40) et d'une pile à combustible configurée pour fournir une puissance électrique aux propulseurs (30a-d).

8. Système de propulsion selon l'une quelconque des revendications précédentes, ledit système de propulsion comprenant un moteur à combustion interne tel qu'un moteur à turbine à gaz (42) couplé à un générateur électrique (41) pour fournir une puissance électrique aux propulseurs (30a- d).

9. Aéronef (10) comprenant le système de propulsion selon l'une quelconque des revendications précédentes.

10. Aéronef selon la revendication 9, ledit aéronef (10) comprenant un aéronef à aile basculante (10) comprenant un ou plusieurs propulseurs (30a-d) montés de manière fixe sur une aile (16), ladite aile (16) pouvant pivoter par rapport à un fuselage (12) de l'aéronef (10).

11. Procédé de commande d'un aéronef selon la revendication 9 ou la revendication 10, le procédé comprenant : au moyen d'un dispositif de commande, la commande de la vitesse de rotor et du pas des pales (37) des premier et second propulseurs (30a-d) selon un procédé de commande comprenant :

    la réception d'une entrée de poussée commandée ; et la détermination d'une combinaison de vitesses de rotor et d'angles de pas de pale pour chaque rotor qui fournit la poussée commandée tout en produisant des fréquences de tonalité différentes à partir de chaque rotor pour générer un pas de pale et une vitesse de rotor cibles pour chaque rotor.

12. Procédé selon la revendication 11, ledit procédé comprenant la détermination d'un spectre de fréquences du système de propulsion, et la commande du système de propulsion (11) pour augmenter une séparation des pics du spectre de fréquences dans le domaine fréquentiel.

*FIG. 1*

*FIG. 2*

*FIG. 3*

EP 4 119 443 B1

*FIG. 4*

*FIG. 5*

```
┌──────────────────────────────────────────────┐
│                           │                    │
│                           ▼                    │
│              ┌────────────────────────────┐    │
│              │   Thrust change requested  │    │
│              └────────────────────────────┘    │
│                           │                    │
│                           │                    │
│                           ▼                    │
│        ┌──────────────────────────────────┐    │
│        │ Adjust motor torque and blade     │    │
│        │ pitch such that first harmonic     │    │
│        │ frequency of first propulsor       │    │
│        │ differs from that of second        │    │
│        │ propulsor                          │    │
│        └──────────────────────────────────┘    │
│                           │                    │
└───────────────────────────┘                    
```

*FIG. 6*

Thrust change requested

Adjust motor torque and blade pitch to maintain constant speed

*FIG. 7*

*FIG. 8*

*FIG. 9b*

*FIG. 9a*

*FIG. 10a*

*FIG. 10b*

EP 4 119 443 B1

**EP 4 119 443 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3543119 A

- US 2017274991 A